# EUROPEAN PATENT APPLICATION

(11) **EP 1 107 089 A1**
(43) Date of publication of application: **13.06.2001**
(21) Application number: 00311024.4
(22) Date of filing: 11.12.2000
(51) Int. Cl.: G06F 1/00

(54) **Strong authentication method using a telecommunications device**

(30) Priority: 11.12.1999 GB 9929291
(71) Applicant: Connectotel Limited, London E14 7DG (GB)
(72) Inventor: Williamson, Marcus, Camberley GU15 2JQ (GB)
(74) Representative: Pacitti, Pierpaolo A.M.E.

(57) **Abstract**

There is described a method of obtaining strong authentication for a remote network, by way of the remote network generating a security code, and transmitting this code to a user, via a separate connection (for example, via a mobile telephone).

This security code being used by the user to gain access to the remote network.

## Description

The present invention relates to a strong authentication method using a telecommunications device, for example, mobile phone or a pager. Strong authentication requires the use of a security token. Specialised security tokens are provided whenever the need for secure access to a remote network location is required, for example, when accessing a bank account over the internet.

A security token is conventionally a device by which means a user can prove to the remote network site which they wish to access their identity. Strong authentication requires the combination of a username, password and a security token, and is used when authentication by means of a username and password alone is not sufficient for security purposes.

Conventional security token devices are typically specialised devices and are consequently often expensive. In addition, they are normally not familiar to the user community and so are often difficult to use. Furthermore, the tokens may themselves be lost or damaged.

For users who possess a mobile phone, pager or other data communication means having a visual display, a means to provide strong authentication can be established without the use of a dedicated security token device.

An authentication process to provide a user with strong authentication, comprising the steps of:-
(i) establishing a connection from a terminal device to a remote network/internet site;
(ii) entering a user password and communicating the user password from the terminal device to the remote site through said connection;
(iii) generating at the remote site, on receipt of the password, an authentication security code;
(iv) establishing a second connection from the remote site to the user, the second connection being separate from said first connection;
(v) transmitting security code to the user through said second connection;
(vi) entering the security code at the terminal device and transmitting the security code from the terminal device to the remote site through said first connection;
(vii) comparing the security code entered at the terminal device with the security code previously generated by the remote site; and
(viii) providing authentication on correct comparison.
The invention seeks to provide a strong authentication method using a telecommunications device for a user accessing a remote server or host from a terminal by means of a network, the user having a telecommunications device with a display, the strong authentication method comprising:
the user connecting to the server or host;
the server or host requesting login data from the user;
the server or host correlating said login data with data held in a database representing the telephone number of said telecommunications device;
the server or host generating a security PIN and communicating said PIN to said telecommunications device;
the user receiving said PIN from said telecommunications device and entering said PIN into said terminal;
the PIN entered by said user being compared with the PIN generated by said server or host;
wherein if the PIN entered by the user and the PIN generated by said server or host match then the user is allowed access to said remote server or host or to software accessed via said remote server/host.

Preferably, the PIN entered by the user and the PIN generated by the server or host is compared by software running at the server or host.

Preferably, the telecommunications device is a mobile phone or pager.

Preferably the PIN is a generated randomly by means of a suitable software algorithm.

More preferably, the PIN is generated for single or one-time use.

Preferably, the PIN is communicated to the telecommunications device by the server or host in the form of a text message.

Preferably, the server or host is a workstation or internet site.

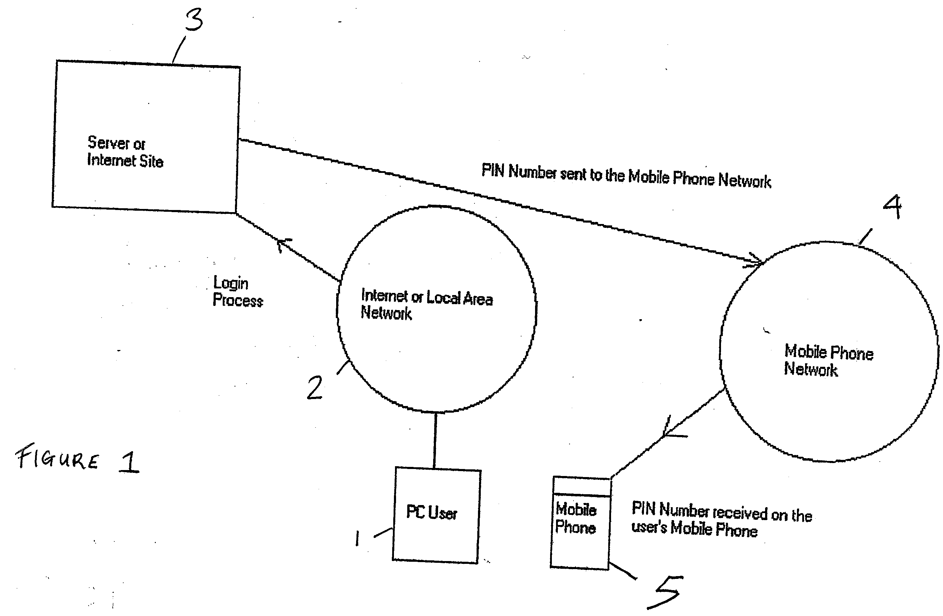

The present example will be further illustrated by way of example, with reference to the accompanying drawing in which the single Figure is a diagram illustrating the strong authentication process.

As illustrated, a user, having a telecommunications device 5 with a display, connects to a remote server/host 3 via a network 2 (for example a LAN, WAN or an internet site) via suitable terminal-type device 1, for example a PC or workstation. The telecommunications device 5 may, for example, be a mobile telephone or pager, or other portable communications type device which has an access code or PIN known to the user to restrict unauthorised use.

The remote server/host 3 accessed by the user then executes a software login routine to prompt the user for login data, for example, a username and/or password. The login routine includes a suitable algorithm to correlate the user login data with a telephone number stored in a suitable database and which corresponds to the user's telecommunication device 5. The database may be stored on the server/host itself or may be remotely stored and be accessed by the server/host.

The remote server/host 3 generates a security PIN number, for example a "one-time use" PIN, by means of a suitable software algorithm such as, for example, may be used to generate random numbers. The security PIN is then sent via the telecommunication network 4 to the telecommunications device 5, for example, as a text message which is displayed on the display of the telecommunications device 5.

The user is thus notified of the security PIN by the telecommunication device 5. The user enters the security PIN at the terminal 1 and the security PIN data entered by the user is then compared by the server/host 3 with the security PIN generated by the server/host 3. If the two entries match, then the user is authenticated to the remote server/host 3. The security PIN communicated via the telecommunications network to the telecommunication device 5, proves the user's identity. The telecommunications device 5, thus acts as a "security token" to prove the user's identity and authorise the user's access to the remote server/host.

It can thus be seen that the security token provided in accordance with the present invention exhibits many substantial advantages over the prior art devices and permits a user to be identified and their access to a remote server/host authenticated over a network without the requirement for additional security token devices.

While the above embodiment has been chosen to illustrate the present invention, it will be apparent to those skilled in the art from this disclosure that various changes and modifications can be made herein without departing from the scope of the invention.

## Claims

1. An authentication process to provide a user with strong authentication, comprising the steps of:-
(i) establishing a connection from a terminal device to a remote network/internet site;
(ii) entering a user password and communicating the user password from the terminal device to the remote site through said connection;
(iii) generating at the remote site, on receipt of the password, an authentication security code;
(iv) establishing a second connection from the remote site to the user, the second connection being separate from said first connection;
(v) transmitting security code to the user through said second connection;
(vi) entering the security code at the terminal device and transmitting the security code from the terminal device to the remote site through said first connection;
(vii) comparing the security code entered at the terminal device with the security code previously generated by the remote site; and
(viii) providing authentication on correct comparison.

2. Authentication process which provides a strong authentication using a telecommunications device to permit a user to access a remote server or host from a terminal by means of a network, the user having a telecommunications device with a display, the authentication process comprising the steps of:
the user connecting to the server or host;
the server or host requesting login data from the user;
the server or host correlating said login data with data held in a database representing the telephone number of said telecommunications device;
the server or host generating a security PIN and communicating said PIN to said telecommunications device;
the user receiving said PIN from said telecommunications device and entering said PIN into said terminal;
the PIN entered by said user being compared with the PIN generated by said server or host;
wherein if the PIN entered by the user and the PIN generated by said server or host match then the user is allowed access to said remote server or host or to software accessed via said remote server/host.

3. Authentication process as claimed in Claim 2, wherein the telecommunications device is a mobile phone or pager.

4. Authentication process as claimed in any preceding claim, wherein the PIN entered by the user and the PIN generated by the server or host is compared by software running at the server or host.

5. Authentication process as claimed in any preceding claim, wherein the PIN is a generated randomly by means of a suitable software algorithm.

6. Authentication process as claimed in any preceding claim, wherein the PIN is generated for single or one-time use.

7. Authentication process as claimed in any preceding claim, wherein the PIN is communicated to the telecommunications device by the server or host in the form of a text message.

8. Authentication process as claimed in any preceding claim, wherein the server or host is a workstation or internet site.

9. Authentication process substantially as herein before described with reference to the accompanying figure.
